# EUROPÄISCHE PATENTANMELDUNG

(11) **EP 1 153 707 A1**
(43) Veröffentlichungstag der Anmeldung: **14.11.2001**
(21) Anmeldenummer: 01810426.5
(22) Anmeldetag: 30.04.2001
(51) Int. Cl.: B23Q 11/00, B25F 5/00

(54) **Handwerkzeuggerät mit saugendem Staubsammler**

(30) Priorität: 09.05.2000 DE 10022582
(71) Anmelder: HILTI Aktiengesellschaft, 9494 Schaan (LI)
(72) Erfinder: Frenzel, Jens, 86899 Landsberg (DE); Nussrainer, Helmut, 84424 Isen (DE)
(74) Vertreter: Wildi, Roland

(57) **Zusammenfassung**

Ein Handwerkzeuggerät (1), insbesondere Bohr- und/oder Meisselgerät, weist einen mit einer Saugleitung (6) über Führungs- und Befestigungsmittel (7) an einem stabförmigen Tiefenanschlag (9) feststellbar befestigten Staubsammler (3) mit einem, ein Werkzeug (2) zumindest teilweise umfänglich umgreifenden, Staubschirm (4) auf.

## Beschreibung

Die Erfindung bezeichnet ein sich durch abrasiven Materialabtrag axial vorschiebendes Handwerkzeuggerät, insbesondere ein elektrisch angetriebenes Bohr- und/oder Meisselgerät zum Bearbeiten von Stein oder steinähnlichen Werkstoffen, mit saugendem Staubsammler für das abrasiv abgetragene Material.

Nach der Druckschrift DE4321906 ist ein längs der Werkzeugachse über einen federnden Balg mit dem Bohrgerät unterhalb des Werkzeugs verbundener Staubsammler vorbekannt, welcher an einer Wand dichtend anliegend das hineinfallende, abrasiv abgetragene, Material aufsammelt. Nach der Druckschrift DE9411587 ist ein derartiger federnder Balg, das Werkzeug zwischen der Wand und dem Gerätegehäuse des Bohrgerätes dichtend einschliessend, umlaufend ausgeführt und mit einem einen Unterdruck erzeugenden Saugmittel verbunden. Nach der Druckschrift US5688082 ist ein derartiger umlaufender Balg über einen feststellbaren Klemmblock in der Nähe der Werkzeugaufnahme am zylindrischen Flansch des Bohrgerätes verbunden. Eine am wandseitigen Balgring befestigte Stange ist gleitend in einem Loch des Klemmblocks gelagert und dient vermittelt über einen Reiter an der Stange als Tiefenanschlag. Nachteilig bei derartigen, das Werkzeug dichtend umschliessenden, Staubsammlern ist die stark eingeschränkte Sicht durch den, meist transparenten, Staubsammler auf das Werkzeug und die Behinderung des unmittelbaren Zugriffs auf das Werkzeug bzw. die Werkzeugaufnahme.

Die Druckschrift DE19543599 offenbart einen separat an die Wand angelegten Staubsammler mit freiliegenden, d.h. nicht in einem dichtenden Raum angeordneten, Saugöffnungen, welche das Werkzeug zumindest teilweise umfänglich umgreifen. Nachteilig bei derartigen Staubsammlern ist deren notwendige zusätzliche Fixierung an der Wand durch eine freie Hand des Nutzers. Nach der Druckschrift EP0456598 wird ein derartiger Staubsammler unter Verwendung einer biegesteifen, axial federnd beweglichen, schnabelförmig längs der Werkzeugachse geführten Saugleitung am Klemmblock mit Zusatzhandgriff befestigt. Nachteilig ist die insbesondere bezüglich verschiedener Bohrerlängen nur eingeschränkt universell einsetzbare, durch die Biegesteifigkeit und den Federweg der Saugleitung begrenzte, Ausführung.

Nach der Druckschrift US4064952 setzt sich der freiliegende, das Werkzeug umfänglich umgreifende, Staubsammler schnabelförmig, radial ausserhalb, längs der Werkzeugachse fort und ist beweglich direkt mit dem Gerätegehäuse des Bohrgerätes verbunden. In die, das Werkzeug wandseitig umgreifende, Öffnung wird Druckluft aus dem Bohrgerät eingeleitet, welche das abgetragene Material in den Staubsammler befördert. Zudem ist am anderen Ende das Staubsammlers ein Unterdruck erzeugendes Saugmittel anschliessbar. Eine derartige Ausführung ist durch die spezielle Befestigung nicht universell an verschiedenartigen Bohrgeräten montierbar.

Die Druckschrift US3779663 offenbart einen mit dem Bohrgerät verbundenen, seitlich axial zum Werkzeug verlaufenden, längs der Werkzeugachse feststellbaren stabförmigen Tiefenanschlag. Derartige stabförmige Elemente werden nach der Druckschrift DE29605221 auch unter Zwischenschaltung feststellbarer Klemmblöcke, befestigt auf meist standardisierten, in der Nähe der Werkzeugaufnahme angeordneten, zylindrischen Flanschen, mit dem Bohrgerät verbunden. Derartige, drehbar um die Werkzeugachse feststellbare, zylindrische Flansche kombinieren nach der Druckschrift DE19606498 die Befestigung eines Zusatzhandgriffes mit der Befestigung eines Tiefenanschlags.

Die Aufgabe der Erfindung besteht unter Meidung obiger Nachteile in einem universell einsetzbaren und weder wesentlich die Sicht noch die Handhabbarkeit beeinträchtigenden, Unterdruck verwendenden, Staubsammler, welcher als weiterer Aspekt weitgehend universell an verschiedenartigen Bohrgeräten montierbar ist.

Die Aufgabe wird im wesentlichen durch die Merkmale der unabhängigen Ansprüche gelöst. Vorteilhafte Weiterbildungen ergeben sich aus den Unteransprüchen.

Im wesentlichen wird der freiliegende, das Werkzeug zumindest teilweise umfänglich umgreifende, Staubsammler unter Verwendung einer biegesteifen, axial federnd beweglichen, schnabelförmig im radialen Abstand längs der Werkzeugachse geführten, Saugleitung am, überwiegend standardisierten, stabförmigen Tiefenanschlag feststellbar befestigt, welcher seinerseits am Klemmblock, vorteilhaft zusammen mit diesem und einem drehbaren Zusatzhandgriff über ein Spannband festklemmbar, und dieser nahe der Werkzeugaufnahme, vorteilhaft am zylinderförmigen Flansch, am Gerätegehäuse des Handwerkzeuggeräts befestigt ist. Dazu weist der Staubsammler seitlich an der Saugleitung angeordnete Befestigungs- und Führungsmittel zur längs der Werkzeugachse, vorteilhaft parallel, beweglich feststellbaren Befestigung an dem stabförmigen Tiefenanschlag auf, welcher vorteilhaft, vollständig oder teilweise den Tiefenanschlag umschliessende, kreiszylindrische oder prismatische Ausnehmungen zur formschlüssigen Führung aufweist. Über ein Klemmmittel, vorteilhaft eine Handschraube, wird der Staubsammler längs bezüglich der Werkzeugachse und/oder drehbar bezüglich der Achse des Tiefenanschlags in stetigen und/oder diskreten Positionen festgelegt.

Durch die Verstellmöglichkeit des Tiefenanschlags einerseits und der frei wählbaren Position zur Festlegung des Staubsammlers vor oder hinter dem Klemmblock andererseits ist ein sehr weiter Positionierungsbereich längs zur Werkzeugachse möglich. Die längs flexible Staubleitung des Staubsammlers, vorteilhaft über ineinander eingreifende, gegeneinander gefederte, Teleskoprohre ausgebildet, steht somit vollständig für die Abstandsverkürzung durch den Vorschub des Handwerkzeuggerätes in das abzutragende Material hinein zur Verfügung.

Vorteilhaft liegt der Mittelpunkt der freiliegenden Öffnungen zur Absaugung des abgetragenen Materials, welcher bei zweckentsprechender Befestigung im wesentlichen auf der Werkzeugachse liegt, innerhalb der durch die Achse der Befestigungs- und Führungsmittel gebildeten Ebene in dem radialen Abstand zur Achse der Befestigungs- und Führungsmittel, welcher dem radialen Abstand der Befestigungsöffnung des Klemmblocks für den Tiefenanschlag bezüglich der Werkzeugachse entspricht. Somit ist stets eine, die Werkzeugachse beinhaltende, zweckentsprechende radiale Positionierung des Staubsammlers möglich. Gewisse, durch verschiedenartige Handwerkzeuggeräte und deren Klemmblöcke bedingte, geringfügige radiale Unterschiede werden über den, durch eine grosszügig dimensionierte Öffnung ausgebildeten, Freiraum ausgeglichen.

Durch die standardisierte zylinderförmige Ausgestaltung des Flansches kann das Klemmstück gespiegelt montiert und somit auch für linkshändigen Betrieb eine zweckentsprechende Positionierung des Staubsammlers erfolgen.

Nachfolgend wird eine vorteilhafte Ausführung näher erläutert anhand
Fig. 1 als Staubsammler bei langem Werkzeug und
Fig. 2 als Staubsammler bei kurzem Werkzeug.

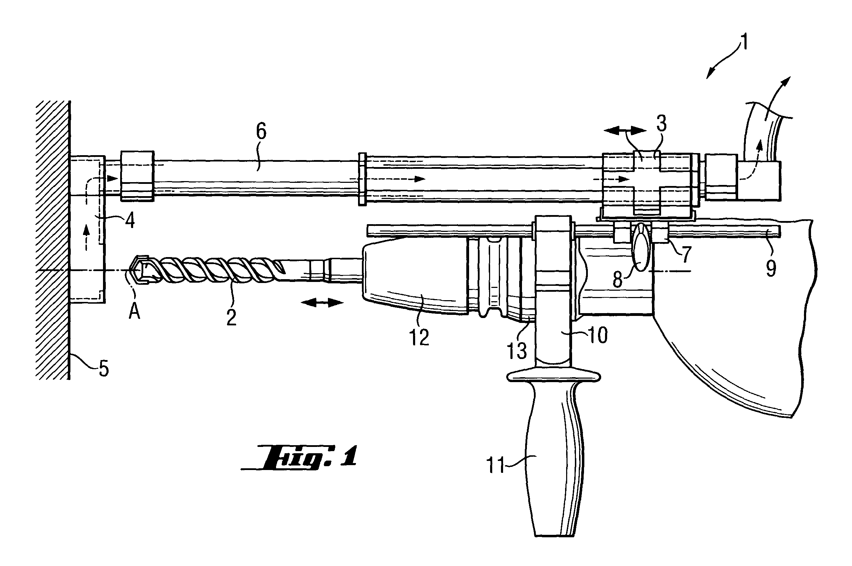

Nach Fig. 1 ist an einem Handwerkzeuggerät 1 mit einem Werkzeug 2 längs der Werkzeugachse A am Gerätegehäuse ein Staubsammler 3 befestigt, welcher mit seinem Staubschirm 4 an einer Fläche 5, vorteilhaft dichtend, anliegt. Der freiliegende, das Werkzeug 2 zumindest teilweise mit seinem Staubschirm 4 umfänglich umgreifende, Staubsammler 3 weist eine biegesteife, axial federnd bewegliche, schnabelförmig im radialen Abstand längs der Werkzeugachse A geführten, Saugleitung 6 auf, welche vorteilhaft aus axial gefedert gelagerten Teleskoprohren ausgebildet ist. Der Staubsammler 3 ist mit der Saugleitung 6 über Führungs- und Befestigungsmittel 7, welche ein Klemmmittel 8 in Form einer Handschraube aufweisen, an einem, überwiegend mit einem Durchmesser von 5 bzw. 8 mm standardisierten, stabförmigen Tiefenanschlag 9 feststellbar befestigt. Der längs der Werkzeugachse A verschiebbar am Gerätegehäuse befestigte Tiefenanschlag 9 ist seinerseits an einem Klemmblock 10, welcher zudem mit einem Zusatzhandgriff 11 versehen ist, nahe einer Werkzeugaufnahme 12 an einem zumeist zylinderförmigen Flansch 13 am Gerätegehäuse des Handwerkzeuggeräts 1 befestigt. Die Führungs- und Befestigungsmittel 7 sind parallel zur Werkzeugachse A an dem stabförmigen Tiefenanschlag 9 beweglich feststellbar. Für kurze Werkzeuge 2 ist der Staubsammler 3 mit seinem Führungs- und Befestigungsmittel 7 auf der dem Werkzeug 2 abgewandten Seite des Klemmblocks 10 befestigt.

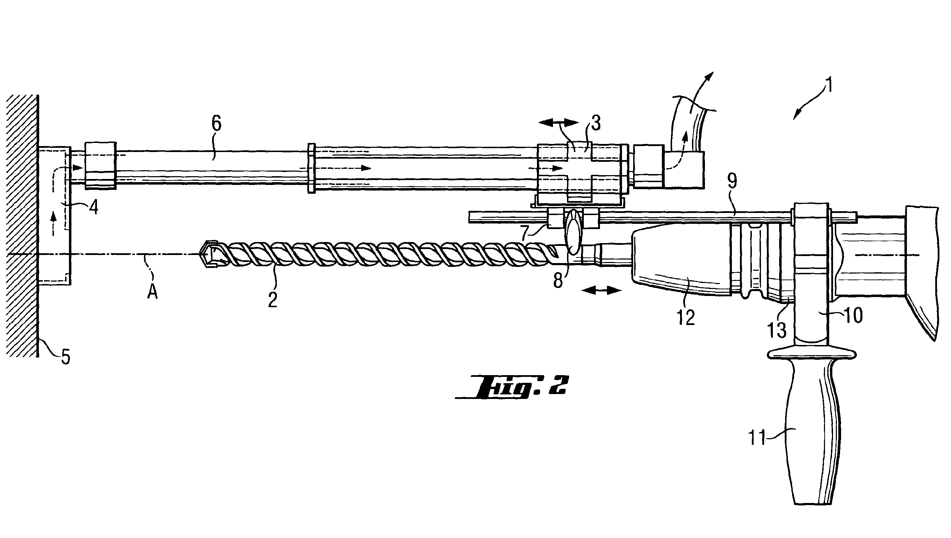

Nach Fig. 2 ist der sowohl auf der dem Werkzeug 2 zugewandten als auch auf der diesem abgewandten Seite des Klemmblocks 10 befestigbare Staubsammler 3 für lange Werkzeuge 2 mit seinem Führungs- und Befestigungsmittel 7 auf der dem Werkzeug 2 zugewandten Seite des Klemmblocks 10 befestigt.

## Patentansprüche

1. Handwerkzeuggerät (1), insbesondere Bohr- und/oder Meisselgerät, mit einem am Gerätegehäuse befestigten Staubsammler (3), wobei der freiliegende, ein Werkzeug (2) zumindest teilweise mit einem Staubschirm (4) umfänglich umgreifende, Staubsammler (3) eine biegesteife, axial federnd bewegliche, im radialen Abstand längs der Werkzeugachse (A) geführte, Saugleitung (6) aufweist, **dadurch gekennzeichnet, dass** der Staubsammler (3) mit der Saugleitung (6) über Führungs- und Befestigungsmittel (7) an einem stabförmigen, längs der Werkzeugachse (A) verschiebbar am Gerätegehäuse befestigten, Tiefenanschlag (9) feststellbar befestigt ist.

2. Handwerkzeuggerät nach Anspruch 1, **dadurch gekennzeichnet, dass** die Führungs- und Befestigungsmittel (7) ein Klemmmittel (8) aufweisen.

3. Handwerkzeuggerät nach Anspruch 1 oder Anspruch 2, **dadurch gekennzeichnet, dass** der Tiefenanschlag (9) über einen Klemmblock (10) am Gerätegehäuse des Handwerkzeuggeräts (1) befestigt ist.

4. Handwerkzeuggerät nach Anspruch 3, **dadurch gekennzeichnet, dass** der Klemmblock (10) nahe einer Werkzeugaufnahme (12) an einem Flansch (13) befestigt ist.

5. Handwerkzeuggerät nach Anspruch 3 oder Anspruch 4, **dadurch gekennzeichnet, dass** der Klemmblock (10) mit einem Zusatzhandgriff (11) versehen ist.

6. Handwerkzeuggerät nach einem der Ansprüche 3 bis 5, **dadurch gekennzeichnet, dass** der Staubsammler (3) mit seinem Führungs- und Befestigungsmittel (7) sowohl auf der dem Werkzeug (2) zugewandten als auch auf der diesem abgewandten Seite des Klemmblocks (10) am stabförmigen Tiefenanschlag (9) feststellbar ist.
